# EUROPÄISCHE PATENTSCHRIFT

(11) **EP 4 155 057 B1**
(45) Veröffentlichungstag und Bekanntmachung des Hinweises auf die Patenterteilung: **26.03.2025**
(21) Anmeldenummer: 22183283.5
(22) Anmeldetag: 06.07.2022
(51) Int. Cl.: B29C 55/20

(54) **MEHRTEILIGE KLUPPENEINHEIT SOWIE RECKANLAGE**
MULTI-PART CLIP UNIT AND STRETCHING SYSTEM
UNITÉ DE PINCE EN PLUSIEURS PIÈCES, AINSI QU'INSTALLATION D'ÉTIRAGE

(30) Priorität: 09.07.2021 DE 102021117782
(43) Veröffentlichungstag der Anmeldung: 29.03.2023
(73) Patentinhaber: Brückner Maschinenbau GmbH, 83313 Siegsdorf (DE)
(72) Erfinder: WALDLEITNER, Georg, 83093 Bad Endorf (DE); ROTT, Thomas, 83313 Siegsdorf (DE); JAUERNIG, Rudolf, 83373 Taching (DE)
(74) Vertreter: Flach Bauer & Partner Patentanwälte mbB

(56) Entgegenhaltungen:
- WO-A1-2020/077993
- CN-U- 203 019 679
- CN-U- 203 557 704
- GB-A- 2 148 961
- US-A- 4 939 825

## Beschreibung

Die Erfindung betrifft eine mehrteilige Kluppeneinheit sowie eine Reckanlage mit einer mehrteiligen Kluppeneinheit.

Reckanlagen finden insbesondere bei der Herstellung von Kunststofffolien Anwendung. Üblicherweise wird in solchen Anlagen die zu reckende Materialbahn, in der Regel ein Kunststofffilm, mittels Kluppeneinheiten bzw. Kluppen erfasst und durch die Anlage bewegt. Die Kluppeneinheiten sind auf umlaufenden Führungsschienen verfahrbar angeordnet und werden zentral oder einzeln angetrieben.

Während des eigentlichen Reckvorgangs wirken große Kräfte auf die Kluppen, sodass diese äußerst hohen Belastungen ausgesetzt sind. Daher werden besondere Belastungsanforderungen an die Kluppeneinheiten gestellt.

Die Herstellung der Kluppeneinheiten ist deswegen sehr aufwendig, da üblicherweise die Kluppeneinheiten durch Gussverfahren, wie Feinguss, Sandguss oder Croningguss hergestellt werden. Zudem weisen die Kluppeneinheiten eine vergleichsweise komplexe und verschachtelte Geometrie mit großen Hohl- bzw. Leerräumen auf. Dadurch ist eine dichte Anordnung an einem Gussbaum nicht möglich und Nachbearbeitungsschritte, beispielsweise Verzinken einzelner Bauteile, sind erschwert und kostenintensiv.

Die CN 203019679 U offenbart eine Kluppeneinheit mit einer speziellen Klemmvorrichtung.

Die GB 2 148 961 A offenbart eine zweiteilige Kluppe, die zwei Hauptteile und mehrere Gleitelemente aufweist, die an den Hauptteilen befestigt sind.

Es ist daher Aufgabe der Erfindung, eine Kluppeneinheit sowie eine Reckanlage mit Kluppeneinheiten bereitzustellen, die einfacher und kostengünstiger herzustellen sind, zugleich jedoch den hohen Anforderungen für Reckanlagen genügen.

Die Aufgabe wird gelöst durch eine mehrteilige Kluppeneinheit für eine Reckanlage, insbesondere eine Quer-, Längs- und/oder Simultan-Reckanlage, gemäß Anspruch 1. Die Kluppeneinheit hat ein Hauptteil und wenigstens zwei Führungsteile. Das Hauptteil weist einen Grundkörper sowie eine Klemmvorrichtung zum Klemmen einer Materialbahn auf, und die Führungsteile weisen jeweils einen Grundkörper sowie wenigstens ein Führungselement zur Führung an einer Schiene der Reckanlage auf, wobei die Grundkörper der Führungsteile und der Grundkörper des Hauptteils jeweils als separate Bauteile hergestellt sind und aneinander befestigt sind.

Durch die Mehrteiligkeit der Kluppeneinheit in einen Hauptteil und zwei Führungsteile werden kleinere Einzeleinheiten geschaffen, wodurch die Komplexität der einzelnen Bauteile deutlich reduziert wird. Dadurch kann beispielsweise bei einem Gussverfahren eine engere und somit dichtere Bestückung am Gussbaum erreicht werden.

Zudem werden die Kosten weiterer Behandlungsschritte verringert, da zum Beispiel beim Verzinken die Kosten von der Größe der Oberfläche abhängig sind.

Die Erfinder haben erkannt, dass eine zumindest dreiteilige Kluppeneinheit allen Anforderungen bezüglich Belastungsgrenzen einhalten kann, die an Kluppeneinheiten für Reckanlagen gestellt werden, obwohl die Kluppeneinheit in ein Haupt- und wenigstens ein separates Führungsteil geteilt ist.

Dabei können Abschnitte des Grundkörpers des Hauptteils Abschnitte der Klemmvorrichtung bilden.

Insbesondere weist die Klemmvorrichtung wenigstens eine Messerklappe auf, die rotierbar am Grundkörper des Hauptteils befestigt ist.

Erfindungsgemäß sind die Grundkörper der Führungsteile und der Grundkörper des Hauptteils aus Metall und können durch Urformen hergestellt sein. Auf diese Weise lassen sich Belastungseigenschaften der Kluppeneinheit weiter verbessern.

Erfindungsgemäß sind die Grundkörper der Führungsteile und der Grundkörper des Hauptteils als separate Bauteile gegossen.

In einer nicht beanspruchten Ausführung sind die Grundkörper der Führungsteile und der Grundkörper des Hauptteils als separate Bauteile geschmiedet.

Die Kluppeneinheit weist eine Primärrichtung auf, insbesondere wobei sich die Grundkörper der Führungsteile parallel zur Primärrichtung erstrecken, um Belastungen effektiv aufzunehmen.

Die Primärrichtung ist zum Beispiel diejenige Richtung, insbesondere die horizontale Richtung, die quer zu einer in der Kluppeneinheit, genauer gesagt der Klemmvorrichtung, aufgenommenen Kante einer Materialbahn verläuft.

In einer Ausgestaltung der Erfindung verläuft die Anlagefläche zwischen dem Grundkörper einer der Führungsteile und dem Grundkörper des einen Hauptteils senkrecht zur Primärrichtung, wodurch eine besonders belastbare Befestigung erreicht wird.

Insbesondere erstreckt sich der überwiegende Teil der Anlagefläche senkrecht zur Primärrichtung.

Für eine einfache und belastbare Befestigung der Grundkörper, sind die Grundkörper der Führungsteile erfindungsgemäß mittels Schrauben der Kluppeneinheit am Hauptteil befestigt, wobei die Schrauben parallel zur Primärrichtung verlaufen.

Die Schrauben sind zum Beispiel dazu ausgelegt, eine Maximalkraft zwischen 700N und 900N, insbesondere von 800N aufnehmen zu können. Auch ist es denkbar, dass die Schrauben höhere Kräfte aufnehmen können.

Die Schrauben können Passschrauben sein.

In einer Ausführungsform hat die Kluppeneinheit eine U-Form mit einer Basis und zwei Schenkeln, insbesondere wobei der Grundkörper des Hauptteils die Basis und die Grundkörper der Führungsteile jeweils einen der Schenkel bilden. Die Verwendung einer U-Form führt zu einer besonders stabilen Kluppeneinheit.

Die U-Form besteht insbesondere in Seitenansicht und/oder im Querschnitt.

Die Basis kann sich senkrecht zur Primärrichtung und/oder die Schenkel können sich parallel zur Primärrichtung erstrecken.

Die Führungsteile verlaufen insbesondere parallel zueinander.

Das Hauptteil kann eine Materialseite und eine Führungsseite aufweisen, wobei die Klemmvorrichtung an der Materialseite vorgesehen ist und/oder die Führungssteile sind an der Führungsseite am Hauptteil befestigt. Auf diese Weise lassen sich die Funktionen der Kluppeneinheit klar trennen.

Die Seiten sind als Seiten in Primärrichtung zu verstehen.

In einer Ausführungsform weist die Kluppeneinheit eine Aufnahme auf, die zumindest durch die Führungsteile begrenzt ist, wobei die Anlagefläche der Grundkörper zwischen der Klemmvorrichtung und der Aufnahme angeordnet ist, wodurch die Leervolumina beim Urformen stark verkleinert werden.

Mit Anlagenfläche der Grundkörper ist im Rahmen der Erfindung die Anlagefläche zwischen dem Grundkörper eines der Führungsteile und dem Grundkörper des wenigstens einen Hauptteils zu verstehen.

Die Anlagefläche liegt insbesondere in Primärrichtung zwischen der Klemmvorrichtung und der Aufnahme.

Zur weiteren Vereinfachung der Geometrie kann die Aufnahme vor der Führungsseite des Hauptteils angeordnet sein und/oder das Hauptteil und die Führungsteile können die Aufnahme definieren.

In einer Ausführungsform ist an den Grundkörpern der Führungsteile jeweils wenigstens ein Befestigungselement zur Befestigung des Führungselements und/oder eines Antriebselements ausgebildet, insbesondere kann das wenigstens eine Befestigungselement an die Aufnahme angrenzen und/oder sich in die Aufnahme erstrecken, wodurch die Montage der Kluppeneinheit vereinfacht werden kann.

Um eine zuverlässige und sichere Führung der Kluppeneinheit auf der Schiene zu gewährleisten, kann das Führungselement eine Rolle, ein Gleitelement und/oder ein magnetisches Element sein, und/oder wobei das Antriebselement kann eine Kette, ein Teil einer Kette, ein Teil eines Linearmotors und/oder ein Eingriffsvorsprung für einen Riemen eines Antriebssystems der Reckanlage sein.

Das magnetische Element ist zum Beispiel ein Permanentmagnet oder ein ferromagnetisches Gegenstück für einen Magneten.

Die Aufgabe wird ferner gelöst durch eine Reckanlage, insbesondere eine Quer-, Längs- und/oder Simultan-Reckanlage mit einer Schiene und wenigstens einer mehrteiligen Kluppeneinheit wie zuvor beschrieben, wobei die Kluppeneinheit mittels des Führungselements an der Schiene geführt ist.

Die zur Kluppeneinheit diskutierten Merkmale und Vorteile gelten gleichermaßen für die Reckanlage und umgekehrt.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Fig. 1:: eine schematische Darstellung einer ersten Ausführungsform einer erfindungsgemäßen Reckanlage,
- Fig. 2:: eine schematische Darstellung einer zweiten Ausführungsform einer erfindungsgemäßen Reckanlage,
- Figs. 3, 4:: eine perspektivische Ansicht bzw. Seitenansicht einer ersten Ausführungsform einer erfindungsgemäßen Kluppeneinheit,
- Fig. 5:: die separaten Grundkörper der Kluppeneinheit gemäß Figur 3,
- Fig. 6:: den Grundkörper des Hauptteils der Kluppeneinheit gemäß Figur 4 in perspektivischer Ansicht, und
- Fig. 7:: eine Seitenansicht einer zweiten Ausführungsform einer erfindungsgemäßen Kluppeneinheit.

Die Reckanlage 10 weist einen Ofen 14 sowie zwei Antriebssysteme 16 auf.

Die Antriebssysteme 16 sind gegenüber einer Symmetrieachse S der Reckanlage 10 spiegelsymmetrisch angeordnet und erstrecken sich zumindest teilweise im Ofen 14. In einer Einlaufzone 18 sowie einer Auslaufzone 20, in denen die Materialbahn 12 der Reckanlage 10 zu- bzw. abgeführt wird, verlaufen die Antriebssysteme 16 außerhalb des Ofens 14.

Neben der Einlaufzone 18 und der Auslaufzone 20 weist die Reckanlage zumindest drei weitere Zonen 22, 24, 26 auf.

Die Zonen 22, 24, 26 grenzen aneinander an, sodass - entlang der üblicher Bewegungs- bzw. Abzugsrichtung R der Reckanlage 10 betrachtet - an die Einlaufzone 18 zunächst die erste Zone 22, dann die zweite Zone 24, dann die dritte Zone 26, und schließlich die Auslaufzone 20 anschließt.

In der an die Einlaufzone 18 angrenzenden ersten Zone 22 der Reckanlage 10, auch Vorheizzone genannt, haben die Antriebssysteme 16 einen ersten Abstand zueinander.

In der zweiten Zone 24, auch Reckzone genannt, vergrößert sich der Abstand der beiden Antriebssysteme 16 zueinander, bis schließlich zu Beginn der dritten Zone 26, auch Wärmebehandlungszone genannt, ein zweiter Abstand erreicht ist.

Jedes der Antriebssysteme 16 hat in an sich bekannter Weise eine Schiene 17, an der eine Vielzahl von Kluppeneinheiten 28 geführt sind. Die Kluppeneinheiten 28 können durch einen Antrieb des jeweiligen Antriebssystems 16 entlang der Schiene 17 bewegt werden.

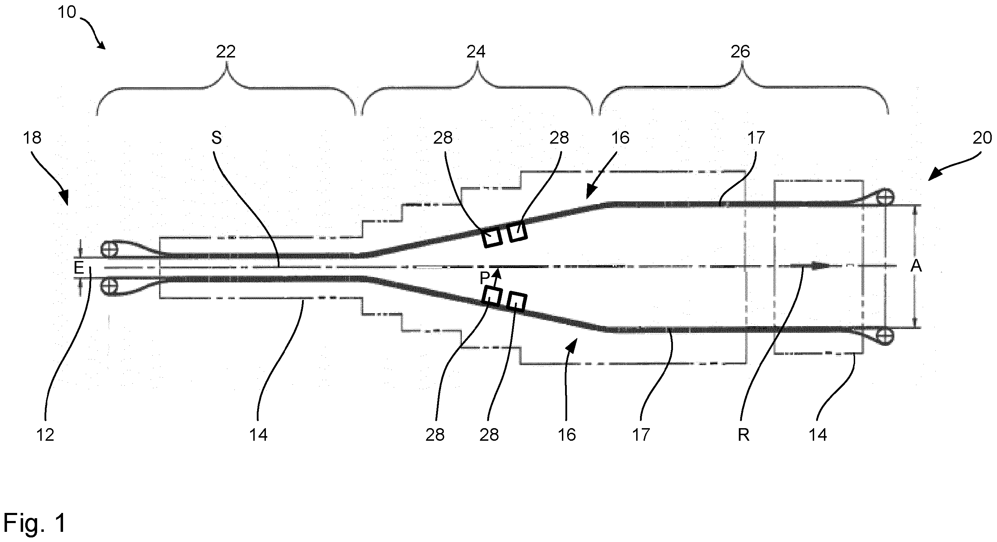

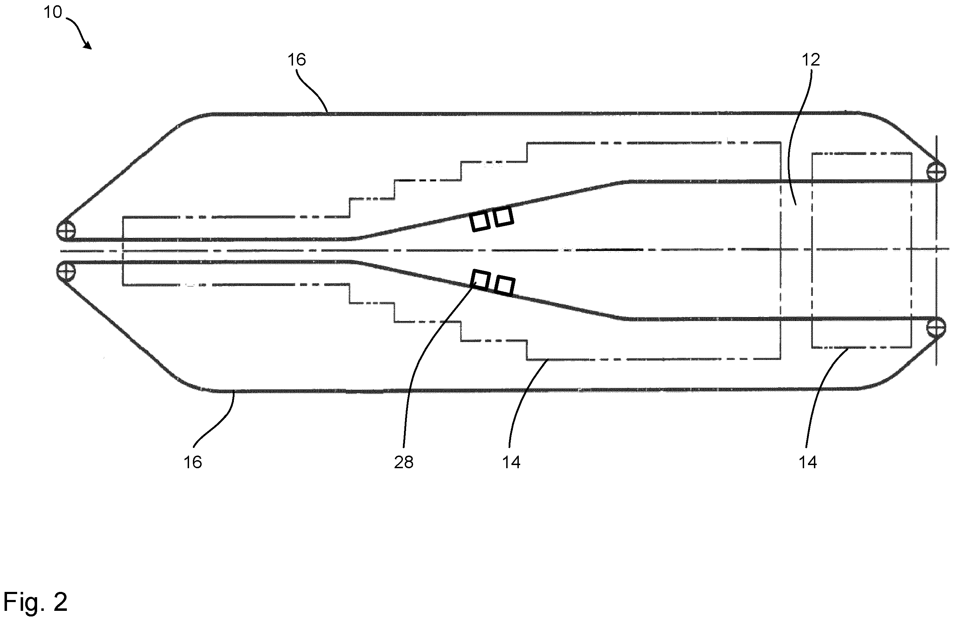

In den Figuren 1 und 2 sind jeweils nur zwei Kluppeneinheiten 28 pro Antriebssystem 16 symbolisch dargestellt. Die Reckanlage 10 weist jedoch mehr Kluppeneinheiten 28 auf.

Die Schienen 17 der jeweiligen Antriebssysteme 16 beschreiben eine geschlossene Bahn von der Einlaufzone 18 zur Auslaufzone 20 und zurück. Der Schienenabschnitt, der den Vorlauf bildet, erstreckt sich in vorgesehener Bewegungsrichtung der Kluppeneinheiten 28 zwischen der Einlaufzone 18 und der Auslaufzone 20 innerhalb des Ofens 14.

Der Schienenabschnitt, der in üblicher Betriebsrichtung von der Auslaufzone 20 zur Einlaufzone 18 verläuft und den Rücklauf bildet, ist im gezeigten Ausführungsbeispiel ebenfalls innerhalb des Ofens 14 angeordnet. Er kann jedoch auch, wie in der Ausführungsform nach Figur 2 gezeigt, außerhalb des Ofens 14 angeordnet sein.

Zum Betrieb der Reckanlage 10 wird die zu reckende Materialbahn 12 in der Einlaufzone 18 der Reckanlage 10 in Abzugsrichtung R zugeführt. Hierzu wird die Materialbahn 12 mittels ihrer in Abzugsrichtung R verlaufenden Kanten an beiden Antriebssysteme 16 befestigt.

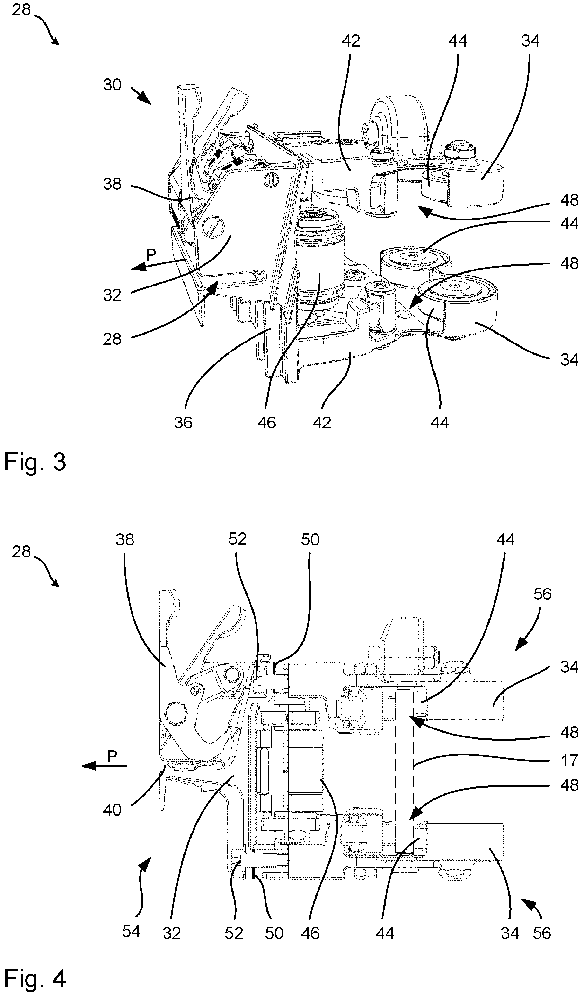

Genauer gesagt werden die Ränder der Materialbahn 12 durch eine Klemmvorrichtung 30 (Fig. 3) der Kluppeneinheiten 28 fixiert und somit durch die Bewegung der Kluppeneinheiten 28 entlang der Schienen 17 des Antriebssysteme 16 bewegt.

In der Einlaufzone 18 hat die Materialbahn 12 eine Breite E senkrecht zur Abzugsrichtung R, die in etwa dem ersten Abstand zwischen den Antriebssystemen 16 entspricht.

Die Materialbahn 12 wird dann durch die erste Zone 22 geführt und dort erwärmt. In der anschließenden zweiten Zone 24, also der Reckzone, wird die Materialbahn 12 gereckt, da sich der Abstand der Antriebssysteme 16 kontinuierlich vergrößert. Zum Ende der zweiten Zone 24 weist die Materialbahn 12 eine zweite Breite A auf.

Nach erfolgter Reckung durchläuft die Materialbahn 12 nun die dritte Zone 26, bei der eine Relaxierung der Materialbahn 12 erfolgen kann, bevor die Materialbahn 12 in der Auslaufzone 20 von den Kluppeneinheiten 28 gelöst wird und sie die Reckanlage 10 mit der Breite A verlässt.

Beispielsweise ist die Reckanlage 10 eine Folien-Breit- bzw. Quer-Reckanlage, die kurz als TDO (TDO = transverse direction oven) bezeichnet wird.

Denkbar ist auch, dass die Reckanlage 10 eine Simultanreckanlage ist, in der die Materialbahn 12 in der zweiten Zone 24, also der Reckzone, nicht nur in Richtung quer zur Abzugsrichtung R sondern auch in der Abzugsrichtung R gereckt werden kann.

Während der Verarbeitung der Materialbahn 12 wirken vor allem in der zweiten Zone 24, also der Reckzone, auf die Kluppeneinheiten 28 große Zugkräfte in eine Zugrichtung. Die Zugrichtung hat eine überwiegende Komponente in eine Primärrichtung P der Kluppeneinheiten 28 und eine kleinere Komponente quer zur Primärrichtung P.

Die Kluppeneinheiten 28 müssen somit daher dazu ausgebildet sein, die hohen auftretenden Zugkräfte auszuhalten, insbesondere in ihrer Primärrichtung P.

Die Primärrichtung P ist dabei diejenige horizontale Richtung, die quer zu einer in der Kluppeneinheit 28 aufgenommenen Kante der Materialbahn 12 verläuft.

In den Figuren 3 und 4 ist eine der Kluppeneinheiten 28 beispielhaft in einer perspektivischen Ansicht bzw. teilweise im Schnitt in einer Seitenansicht dargestellt.

Die Kluppeneinheit 28 weist ein Hauptteil 32 sowie zwei Führungsteile 34 auf, wobei das Hauptteil 32 und die Führungsteile 34 als voneinander separate Bauteile urgeformt und anschließend aneinander befestigt werden. Die Kluppeneinheit 28 ist somit mehrteilig.

Das Hauptteil 32 hat einen Grundkörper 36 und weist die Klemmvorrichtung 30 auf.

Die Seite des Grundkörpers 36, an der die Klemmvorrichtung 30 vorgesehen ist, wird auch Materialseite genannt. Die andere Seite, d. h. die Seite des Grundkörpers 36 ohne die Klemmvorrichtung 30, wird Führungsseite genannt, da an dieser Seite die Führungsteile 34 befestigt sind.

Dementsprechend weist auch das Hauptteil 32 eine Materialseite und eine Führungsseite auf.

Die Klemmvorrichtung 30 ist im gezeigten Ausführungsbeispiel aus Abschnitten des Grundkörpers 36 und am Grundkörper 36 rotierbar befestigten Messerklappe 38 in an sich bekannter Weise ausgebildet.

Die Klemmvorrichtung 30 definiert einen Befestigungsabschnitt 40 bzw. Befestigungsmund, in den der zu befestigende Rand der Materialbahn 12 eingeführt und mittels der Messerklappe 38 an der Kluppeneinheit 28 fixiert werden kann.

Die Primärrichtung P der Kluppeneinheit 28 ist senkrecht zum Rand bzw. der Kante der Materialbahn, die in der Kluppeneinheit 28 fixiert ist. Die Primärrichtung P verläuft beispielsweise in der Figur 4 nach links.

Der Grundkörper 36 ist beispielsweise zumindest im Bereich des Befestigungsabschnitt 40 verzinkt oder vernickelt.

Eine befestigte Materialbahn 12 übt in der zweiten Zone 24 (Reckzone) eine Zugkraft in der Zugrichtung auf die Kluppeneinheit 28 aus.

Die Führungsteile 34 weisen jeweils einen Grundkörper 42 sowie jeweils wenigstens ein Führungselement 44 auf, das am Grundkörper 42 befestigt ist.

In der ersten Ausführungsform weisen die Führungsteile 34 zudem ein Antriebselement 46 auf, das beispielsweise eine Kette bzw. Teile einer Kette des Antriebssystems 16 ist bzw. ist.

Das Antriebselement 46 kann auch ein Eingriffsvorsprung für einen Riemen des Antriebssystems 16 oder Teil eines Linearmotors sein.

Im gezeigten Ausführungsbeispiel sind die Führungselemente 44 als Rollen ausgebildet. Die Führungselemente 44 können in anderen Ausführungsformen jedoch auch Gleitelemente und/oder magnetische Elemente, wie ein Permanentmagnet oder ein ferromagnetisches Gegenstück, sein.

Die Führungsteile 34 definieren eine Aufnahme 48 für die Schiene 17 (auch Führungsschiene genannt). Insbesondere können in den Grundkörpern 42 der Führungsteile 34 je eine Ausnehmung vorgesehen sein, in die die Schiene 17 eingreift.

Die Aufnahme 48 ist dementsprechend vor bzw. auf der Führungsseite des Hauptteils 32 angeordnet.

Die Führungselemente 44, insbesondere Rollen und ggf. Gleitelemente, können in die Aufnahme 48 hineinragen und an der Schiene 17 anliegen und als Führung an der Schiene dienen.

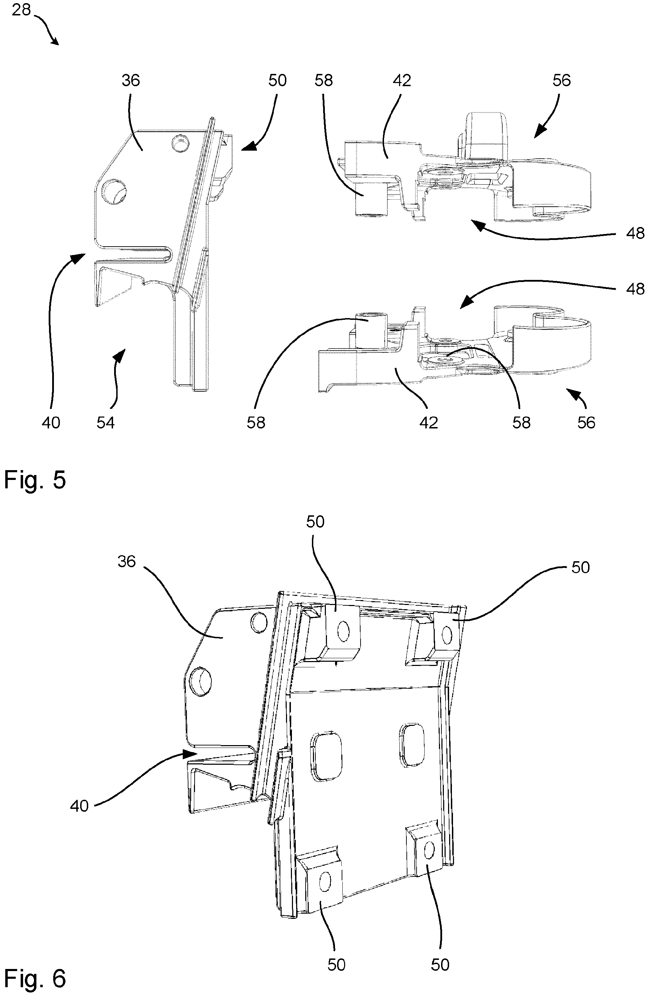

In Figur 5 sind die Grundkörper 36, 42 des Hauptteils 32 bzw. der Führungsteile 34 separat und einzeln dargestellt, beispielsweise wie sie direkt nach ihrer Herstellung, z.B. Urformung sind.

In Figur 6 ist lediglich der Grundkörper 36 des Hauptteils 32 von der Führungsseite aus betrachtet dargestellt.

Die Grundkörper 36, 42 sind aus Metall, beispielsweise G26CrMo4 oder G42CrMo4, und durch ein Gussverfahren, ein Schmiedeverfahren hergestellt oder als Bearbeitungsteil ausgeführt.

Die Grundkörper 42 der Führungsteile 34 haben zudem Befestigungselemente 58, wie Vorsprünge, Ausnehmungen und/oder Vertiefungen, an denen die Führungselemente 44 und/oder Antriebselemente 46 befestigt sein können.

Die Befestigungselemente 58 können dabei an die Aufnahme 48 angrenzen oder erstrecken sich in die Aufnahme 48 hinein.

Die Grundkörper 42 der Führungsteile 34 und der Grundkörper 36 des Hauptteils 32 liegen an Anlageflächen 50 aneinander an und werden mittels Schrauben 52, beispielsweise Passschrauben, der Kluppeneinheit 28 aneinander befestigt.

Die Schrauben 52 sind zum Beispiel dazu ausgelegt, eine Maximalkraft zwischen 700N und 900N, insbesondere von 800N aufnehmen zu können. Auch ist es denkbar, dass die Schrauben höhere Kräfte aufnehmen können.

Wie in Figur 4 zu erkennen, erstrecken sich die Schrauben 52 (annähernd) parallel zur Primärrichtung P. Die Anlageflächen 50 erstrecken sich, wie sie beispielsweise am Grundkörper 36 des Hauptteils 32 in Figur 6 zu sehen sind, senkrecht zur Primärrichtung P.

Die Anlageflächen 50 sind somit entlang der Primärrichtung P zwischen der Klemmvorrichtung 30 und der Aufnahme 48 angeordnet.

Die Grundkörper 42 der Führungsteile 34 sind somit an der Führungsseite des Hauptteils 32 vorgesehen und erstrecken sich vom Grundkörper 36 des Hauptteils 32 parallel zur Primärrichtung P. Die Führungsteile 34 bzw. deren Grundkörper 42 verlaufen somit parallel zueinander.

Die Grundkörper 36, 42 des Hauptteils 32 bzw. der Führungsteile 34 bilden zusammen eine U-Form - in einer Seitenansicht und/oder einem Querschnitt durch die Kluppeneinheit 28 -, sodass die Kluppeneinheit 28 eine U-Form hat.

Die U-Form hat eine Basis 54 sowie zwei Schenkel 56, wobei im gezeigten Ausführungsform die Basis 54 durch den Grundkörper 36 des Führungsteils 34 und die Schenkel durch jeweils einen der Grundkörper 42 der Führungsteile 34 gebildet sind.

Die Basis 54 erstreckt sich senkrecht zu den Schenkeln 56. Die Schenkel 56 erstrecken sich wiederum parallel zur Primärrichtung P.

Dadurch, dass die Grundkörper 36, 42 jeweils kompakter und im Vergleich zur gesamten Kluppeneinheit 28 wesentlich weniger komplexe Geometrien aufweisen - die Grundkörper 42 der Führungsteile 34 können im weitesten Sinne als plattenförmig angesehen werden -, können mehr Grundkörper 36, 42 an einem Gussbaum vorgesehen werden, wodurch sich die Produktionskosten erheblich verringern, zum Beispiel gegenüber einteiligen und ggf. zweiteiligen Kluppeneinheiten. Zudem ist der Aufwand, drei Grundkörper zu gießen, wesentlich geringer, da die Geometrien einfacher gestaltet werden können.

Durch die separate Ausführung der Grundkörper 36, 42 ist die Herstellung der Grundkörper 36, 42 stark vereinfacht. Auch weitere benötigte Prozessschritte, wie die Verzinkung des Grundkörpers 36 im Bereich des Befestigungsabschnittes 40 können einfacher und somit kostengünstiger durchgeführt werden.

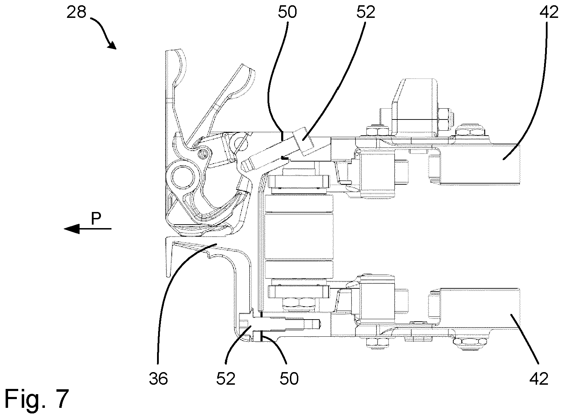

In Figur 7 ist eine weitere Ausführungsformen der Erfindung dargestellt. Die weitere Ausführungsform entspricht im Wesentlichen der zuvor beschriebenen Ausführungsform der Kluppeneinheit 28, sodass im Folgenden lediglich auf die Unterschiede eingegangen wird. Gleiche und funktionsgleiche Teile sind mit denselben Bezugszeichen versehen.

In Figur 7 ist eine mehrteilige Kluppeneinheit 28 gemäß einer zweiten Ausführungsform in einer teilweisen Schnittansicht ähnlich der Figur 4 dargestellt.

Im Gegensatz zur ersten Ausführungsform verlaufen die Schrauben 52 zur Befestigung des Grundkörpers 42 einer der Führungsteile 34 am Hauptteil 32 nicht parallel zur Primärrichtung P sondern schräg hierzu.

Außerdem ist die Anlagefläche 50 (in Figur 7 hervorgehoben) nicht ausschließlich senkrecht zur Primärrichtung P, sondern weist einen Abschnitt parallel zur Primärrichtung P auf. Dadurch wird die Montage vereinfacht aber auch die Stabilität der Kluppeneinheit 28 erhöht.

Der überwiegende Anteil der Anlagefläche 50 verläuft jedoch senkrecht zur Primärrichtung P.

## Patentansprüche

1. Mehrteilige Kluppeneinheit für eine Reckanlage, insbesondere eine Quer-, Längs- und/oder Simultan-Reckanlage (10), mit einem Hauptteil (32) und wenigstens zwei Führungsteilen (34),
wobei das Hauptteil (32) einen Grundkörper (36) sowie eine Klemmvorrichtung (30) zum Klemmen einer Materialbahn (12) aufweist, und die Führungsteile (34) jeweils einen Grundkörper (42) sowie wenigstens ein Führungselement (44) zur Führung an einer Schiene (17) der Reckanlage (10) aufweisen,
wobei die Grundkörper (42) der Führungsteile (34) und der Grundkörper (36) des Hauptteils (32) jeweils als separate Bauteile hergestellt sind und aneinander befestigt sind,
wobei die Grundkörper (42) der Führungsteile (34) und der Grundkörper (36) des Hauptteils (32) aus Metall sind und durch ein Gussverfahren hergestellt sind, und
wobei die Grundkörper (42) der Führungsteile (34) mittels Schrauben (52) der Kluppeneinheit (28) am Hauptteil (32) befestigt sind, wobei die Kluppeneinheit (28) eine Primärrichtung (P) aufweist und die Schrauben (52) parallel zur Primärrichtung (P) verlaufen.

2. Kluppeneinheit nach Anspruch 1, **dadurch gekennzeichnet, dass** sich die Grundkörper (42) der Führungsteile (34) parallel zur Primärrichtung (P) erstrecken.

3. Kluppeneinheit nach Anspruch 2, **dadurch gekennzeichnet, dass** die Anlagefläche (50) zwischen dem Grundkörper (42) einer der Führungsteile (34) und dem Grundkörper (36) des Hauptteils (32) senkrecht zur Primärrichtung (P) verläuft.

4. Kluppeneinheit nach einem der vorhergehenden Ansprüche, **dadurch gekennzeichnet, dass** die Kluppeneinheit (28) eine U-Form mit einer Basis (54) und zwei Schenkeln (56) hat, insbesondere wobei der Grundkörper (36) des Hauptteils (32) die Basis (54) und die Grundkörper (42) der Führungsteile (34) jeweils einen der Schenkel (56) bilden.

5. Kluppeneinheit nach einem der vorhergehenden Ansprüche, **dadurch gekennzeichnet, dass** das Hauptteil (32) eine Materialseite und eine Führungsseite aufweist, wobei die Klemmvorrichtung (30) an der Materialseite vorgesehen ist und/oder dass die Führungssteile (34) an der Führungsseite am Hauptteil (32) befestigt ist.

6. Kluppeneinheit nach einem der vorhergehenden Ansprüche, **dadurch gekennzeichnet, dass** die Kluppeneinheit (28) eine Aufnahme (48) aufweist, die zumindest durch die Führungsteile (34) begrenzt ist, wobei die Anlagefläche (50) der Grundkörper (36, 42) zwischen der Klemmvorrichtung (30) und der Aufnahme (48) angeordnet ist.

7. Kluppeneinheit nach Anspruch 6, **dadurch gekennzeichnet, dass** die Aufnahme (48) vor der Führungsseite des Hauptteils (32) angeordnet ist und/oder das Hauptteil (32) und die Führungsteile (34) die Aufnahme (48) definieren.

8. Kluppeneinheit nach einem der vorhergehenden Ansprüche, **dadurch gekennzeichnet, dass** an den Grundkörpern (42) der Führungsteile (34) jeweils wenigstens ein Befestigungselement (58) zur Befestigung des Führungselements (44) und/oder eines Antriebselements (46) ausgebildet ist, insbesondere wobei das wenigstens eine Befestigungselement (58) an die Aufnahme (48) angrenzt und/oder sich in die Aufnahme (48) erstreckt.

9. Kluppeneinheit nach einem der vorhergehenden Ansprüche, **dadurch gekennzeichnet, dass** das Führungselement (44) eine Rolle, ein Gleitelement und/oder ein magnetisches Element ist, und/oder wobei das Antriebselement (46) eine Kette, Teile einer Kette, ein Teil eines Linearmotors und/oder ein Eingriffsvorsprung für einen Riemen eines Antriebssystems (16) der Reckanlage (10) ist.

10. Reckanlage, insbesondere Quer-, Längs- und/oder Simultan-Reckanlage, mit einer Schiene (17) und wenigstens einer mehrteiligen Kluppeneinheit (28) gemäß einem der vorhergehenden Ansprüche, wobei die Kluppeneinheit (28) mittels des Führungselements (44) an der Schiene (17) geführt ist.

## Claims

1. Multipart clip unit for a stretching system, in particular a transverse, longitudinal and/or simultaneous stretching system (10), having a main part (32) and at least two guide parts (34),
wherein the main part (32) has a base body (36) and a clamping device (30) for clamping a material web (12), and in each case the guide parts (34) have a base body (42) and at least one guide element (44) for guiding on a rail (17) of the stretching system (10),
wherein the base bodies (42) of the guide parts (34) and the base body (36) of the main part (32) are each produced as separate components and are fixed to each other,
wherein the base bodies (42) of the guide parts (34) and the base body (36) of the main part (32) are made from metal and are produced by a casting process, and
wherein the base bodies (42) of the guide parts (34) are fixed to the main part (32) by means of screws (52) of the clip unit (28), wherein the clip unit (28) has a primary direction (P) and the screws (52) run parallel to the primary direction (P).

2. Clip unit according to claim 1, **characterised in that** the base body (42) of the guide parts (34) extend parallel to the primary direction (P).

3. Clip unit according to claim 2, **characterised in that** the contact surface (50) runs perpendicular to the primary direction (P) between the base body (42) of one of the guide parts (34) and the base body (36) of the main part (32).

4. Clip unit according to one of the preceding claims, **characterised in that** the clip unit (28) has a U-shape with a base (54) and two flanges (56), in particular wherein, respectively, the base body (36) of the main part (32) forms the base (54) and the base body (42) of the guide parts (34) forms one of the flanges (56).

5. Clip unit according to one of the preceding claims, **characterised in that** the main part (32) has a material side and a guide side, wherein the clamping device (30) is provided on the material side and/or the guide parts (34) are fixed to the guide side on the main part (32).

6. Clip unit according to one of the preceding claims, **characterised in that** the clip unit (28) has a receptacle (48) which is delimited at least by the guide parts (34), wherein the contact surface (50) of the base body (36, 42) is arranged between the clamping device (30) and the receptacle (48).

7. Clip unit according to claim 6, **characterised in that** the receptacle (48) is arranged in front of the guide side of the main part (32) and/or the main part (32) and the guide parts (34) define the receptacle (48).

8. Clip unit according to one of the preceding claims, **characterised in that** in each case at least one fixing element (58) for fixing the guide element (44) and/or a drive element (46) is formed on the base bodies (42) of the guide parts (34), in particular wherein the at least one fixing element (58) adjoins the receptacle (48) and/or extends into the receptacle (48).

9. Clip unit according to one of the preceding claims, **characterised in that** the guide element (44) is a roller, a sliding element and/or a magnetic element, and/or wherein the drive element (46) is a chain, part of a chain, a part of a linear motor and/or an engagement projection for a belt of a drive system (16) of the stretching system (10).

10. Stretching system, in particular a transverse, longitudinal and/or simultaneous stretching system, having a rail (17) and at least one multipart clip unit (28) according to one of the preceding claims, wherein the clip unit (28) is guided on the rail (17) by means of the guide element (44).

## Revendications

1. Unité de pinçage en plusieurs pièces pour une installation d'étirage, notamment une installation d'étirage transversal, longitudinal et/ou simultané (10), comportant une pièce principale (32) et au moins deux pièces de guidage (34),
dans laquelle la pièce principale (32) présente un corps de base (36) ainsi qu'un dispositif de serrage (30) destiné à serrer une bande de matière (12), et les pièces de guidage (34) comportent chacune un corps de base (42) ainsi qu'au moins un élément de guidage (44) permettant un guidage sur un rail (17) de l'installation d'étirage (10), et
dans laquelle le corps de base (42) des pièces de guidage (34) et le corps de base (36) de la pièce principale (32) sont chacun fabriqués sous forme de composants séparés et fixés les uns aux autres,
dans laquelle le corps de base (42) des pièces de guidage (34) et le corps de base (36) de la pièce principale (32) sont en métal et sont fabriqués par moulage, et
dans laquelle le corps de base (42) des pièces de guidage (34) est fixé à la pièce principale (32) au moyen de vis (52) de l'unité de pinçage (28), l'unité de pinçage (28) ayant une direction primaire (P) et les vis (52) étant parallèles à la direction primaire (P).

2. Unité de pinçage selon la revendication 1, **caractérisée en ce que** le corps de base (42) des pièces de guidage (34) est parallèle à la direction primaire (P).

3. Unité de pinçage selon la revendication 2, **caractérisée en ce que** la surface de contact (50) entre le corps de base (42) de l'une des pièces de guidage (34) et le corps de base (36) de la pièce principale (32) est perpendiculaire à la direction primaire (P).

4. Unité de pinçage selon l'une des revendications précédentes, **caractérisée en ce que** l'unité de pinçage (28) présente une forme en U dotée d'une base (54) et de deux pattes (56), le corps de base (36) de la pièce principale (32) formant notamment la base (54) et le corps de base (42) de chacune des pièces de guidage (34) formant notamment respectivement une des jambes (56).

5. Unité de pinçage selon l'une des revendications précédentes, **caractérisée en ce que** la pièce principale (32) présente un côté matière et un côté guidage, le dispositif de serrage (30) étant prévu côté matière et/ou les pièces de guidage (34) étant fixées côté guidage sur la pièce principale (32).

6. Unité de pinçage selon l'une des revendications précédentes, **caractérisée en ce que** l'unité de pinçage (28) présente un réceptacle (48) qui est limité au moins par les pièces de guidage (34), la surface de contact (50) des corps de base (36, 42) étant agencée entre le dispositif de serrage (30) et le réceptacle (48).

7. Unité de pinçage selon la revendication 6, **caractérisée en ce que** le réceptacle (48) est agencé devant le côté guidage de la pièce principale (32) et/ou la pièce principale (32) et les pièces de guidage (34) définissent le réceptacle (48).

8. Unité de pinçage selon l'une des revendications précédentes, **caractérisée en ce qu'**au moins un élément de fixation (58) respectif, servant à fixer l'élément de guidage (44) et/ou un élément d'entraînement (46), est formé sur le corps de base (42) des pièces de guidage (34), l'au moins un élément de fixation (58) étant notamment adjacent au réceptacle (48) et/ou s'étendant à l'intérieur du réceptacle (48).

9. Unité de pinçage selon l'une des revendications précédentes, **caractérisée en ce que** l'élément de guidage (44) est un galet, un élément coulissant et/ou un élément magnétique, et/ou dans laquelle l'élément d'entraînement (46) est une chaîne, des pièces d'une chaîne, une partie d'un moteur linéaire et/ou un cran pour une courroie d'un système d'entraînement (16) de l'installation d'étirage (10).

10. Installation d'étirage, notamment installation d'étirage transversal, longitudinal et/ou simultané, comportant un rail (17) et au moins une unité de pinçage (28) en plusieurs pièces selon l'une des revendications précédentes, ladite unité de pinçage (28) étant guidée sur le rail (17) au moyen de l'élément de guidage (44).
